# EUROPEAN PATENT APPLICATION

(11) **EP 2 894 544 A1**
(43) Date of publication of application: **15.07.2015**
(21) Application number: 14200414.2
(22) Date of filing: 29.12.2014
(51) Int. Cl.: G06F 3/01, G06F 3/0488

(54) **Display apparatus and method for controlling display apparatus thereof**

(30) Priority: 14.01.2014 KR 20140004628
(71) Applicant: Samsung Electronics Co., Ltd, Gyeonggi-do 443-742 (KR)
(72) Inventor: Jeon, Sung-min, Gyeonggi-do (KR); Lee, Sang-bong, Gyeonggi-do (KR)
(74) Representative: Appleyard Lees

(57) **Abstract**

A display apparatus and a controlling method thereof are provided. The method for controlling a display apparatus includes recognizing two hands of a user with a camera, in response to a user motion using the user's two hands being input, determining a control command using one hand of the two hands, and determining a magnitude of the control command using the other hand of the user, and controlling the display apparatus according to the determined control command and the determined magnitude of the control command.

## Description

### CROSS-REFERENCE TO RELATED APPLICATIONS

This application claims priority from Korean Patent Application No. 10-2014-0004628, filed in the Korean Intellectual Property Office on January 14, 2014, the disclosure of which is incorporated herein by reference.

### BACKGROUND

### 1. Field

Apparatuses and methods consistent with exemplary embodiments relate to a display apparatus and a method for controlling the display apparatus, and more particularly, to a display apparatus in which various functions are controlled using two hands of a user, and a method for controlling the display apparatus.

### 2. Description of the Related Art

With the development of electronic technologies, various kinds of electronic apparatuses have been developed and distributed. In particular, various types of electronic apparatuses including a television are being widely used in general households. Such electronic apparatuses are equipped with a wide variety of functions to live up to the expectations of users. For instance, televisions may be connected to the Internet to provide Internet-based services. In addition, users may view a number of digital broadcast channels through a television.

Accordingly, various input methods are required to use such functions of the electronic apparatuses effectively. For instance, input methods using a remote controller, a mouse, and a touch pad have been applied to control electronic apparatuses.

However, these simple input methods may limit the effective use of various functions of the electronic apparatuses. For example, if all functions of an electronic apparatus are controlled only by a remote controller, it is inevitable that the number of buttons on the remote controller has to be increased. If the number of buttons on the remote controller are increased, it becomes more difficult for general users to effectively use such a remote controller. In addition, if all menus are displayed on the screen, users have to individually go through complicated menu trees in order to select a desired menu, which is inconvenient for the users.

In order to address the above inconvenience, a motion recognition technology has been recently developed to allow users to control a display apparatus more conveniently and intuitively. That is, the technology of controlling a display apparatus by recognizing a user's motion has been gaining attention.

However, a related art motion recognition technology is a technology which uses only one hand. If only one hand is used to control a display apparatus, there is a limit to the use of the display apparatus which is capable of performing various current functions, and there may be inconvenience in using the display apparatus.

### SUMMARY

One or more exemplary embodiments provide to a display apparatus which performs various functions according to motion of two hands of a user, and a method for controlling the display apparatus.

According to an aspect of an exemplary embodiment, there is provided a method for controlling a display apparatus, the method including recognizing two hands of a user using images captured by a camera, in response to a motion of the recognized two hands of the user, determining a control command based on a first hand of the recognized two hands, and determining a magnitude of the control command based on a second hand of the recognized two hands of the user, and controlling the display apparatus according to the determined control command and the determined magnitude of the control command.

The determining the magnitude of the control command may comprise determining the magnitude of the control command according to a number of spread fingers of fingers of the second hand.

The determining the control command may comprise, in response to a motion of the first hand while a cursor is displayed on a specific icon of a display screen, determining a control command corresponding to the specific icon as the control command.

The display apparatus may perform mapping of a motion of the first hand with a certain control command and stores the mapping, and the determining the control command comprises, in response to the motion of the first hand, determining the certain control command mapped with the motion of the first hand as the control command.

The control command comprises at least one of a channel change command, a volume control command, a page change command, and a cursor movement command.

According to an aspect of another exemplary embodiment, there is provided a display apparatus including a display configured to display an image, a motion recognizer configured to recognize two hands of a user using images captured by a camera, and a controller configured to, in response to motion of the recognized two hands of the user, determine a control command based on a first hand of the recognized two hands, determine a magnitude of the control command based on the second hand of the recognized two hands, and control the display apparatus according to the determined control command and the determined magnitude of the control command.

The controller is configured to determine the magnitude of the control command according to a number of spread fingers of the fingers of the second hand.

The controller is configured to, in response to a motion based on the first hand while a cursor is displayed on a specific icon of a display screen, determine a control command corresponding to the specific icon as the control command.

The apparatus may further include a storage configured to store a mapping of a motion of the first hand with a certain control command, and the controller is configured to, in response to the motion of the first hand, determine the certain control command mapped to the motion as the control command.

The control command may include at least one of a channel change command, a volume control command, a page change command, and a cursor movement command.

According to an aspect of another exemplary embodiment, there is provided a method for controlling a display apparatus, the method including displaying a plurality of display screens corresponding to a plurality of contents in a multi-view mode, recognizing two hands of a user using images captured by a camera while the plurality of contents are displayed, in response to motion of the recognized two hands of the user, determining a display screen to be controlled based on a first hand of the recognized two hands of the user, and determining a control command based on the second hand of the recognized two hands of the user, and controlling the display apparatus according to the determined display screen and the determined control command.

The recognizing the hands of the user comprises recognizing the first hand, and recognizing a hand within a predetermined area with reference to the recognized first hand as the second hand.

The determining the display screen to be controlled comprises determining the display screen to be controlled according to a number of spread fingers of the second hand.

The displaying may comprise displaying an indicator corresponding to the number of spread fingers on each of the plurality of display screens.

The multi-view mode is a mode in which the plurality of contents are alternately displayed on one display.

According to an aspect of another exemplary embodiment, there is provided a display apparatus including a display configured to display a plurality of display screens corresponding to a plurality of contents in a multi-view mode, a motion recognizer configured to recognize two hands of a user using images captured by a camera while the plurality of contents are displayed, and a controller configured to, in response to motion of the recognized two hands of the user, determine a display screen to be controlled based on a first hand of the recognized two hands of the user, determine a control command based on a second hand of the recognized two hands of the user, and control the display apparatus according to the determined display screen and the determined control command.

The motion recognizer is configured to recognize the first hand, and recognize a hand within a predetermined area with reference to the recognized first hand as the second hand.

The controller is configured to determine a display screen to be controlled according to a number of spread fingers of fingers of the second hand.

The display is configured to display an indicator corresponding to the number of spread fingers on each of the plurality of display screens.

The multi-view mode is a mode where the plurality of contents are alternately displayed on one display.

According to an aspect of another exemplary embodiment, there is provided a method for controlling a display apparatus, the method including recognizing a motion of a first hand of a user and a motion of a second hand of the user, and determining a type of control command based on the recognized motion of the first hand, and determining a magnitude of the control command based on the recognized motion second hand; and controlling the display apparatus according to the determined control command and the determined magnitude of the control command.

The magnitude of the control command is determined according to a number of spread fingers of the second hand.

The control command comprises at least one of a volume control command, a channel change command, a page change command, and a cursor movement command.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating a brief configuration of a display apparatus according to an exemplary embodiment;
FIG. 2 is a block diagram illustrating configuration of a display apparatus in detail according to an exemplary embodiment;
FIGS. 3A to 5B are views illustrating an exemplary embodiment for changing the magnitude of a control command using two hands according to an exemplary embodiment;
FIG. 6 is a view illustrating an exemplary embodiment for controlling a display apparatus by determining a display screen to be controlled using two hands according to an exemplary embodiment;
FIG. 7 is a view illustrating an exemplary embodiment for determining the location of a display screen to be controlled by a user using two hands according to an exemplary embodiment;
FIGS. 8 to 9D are views illustrating an exemplary embodiment for controlling a display apparatus according to a line-based user motion using two hands according to an exemplary embodiment; and
FIGS. 10 and 11 are flowcharts illustrating a method for controlling a display apparatus using two hands according to various exemplary embodiments.

### DETAILED DESCRIPTION OF EXEMPLARY EMBODIMENTS

It should be observed that the method steps and system components have been represented by related art symbols in the figure, showing only specific details which are relevant for an understanding of the present disclosure. Further, details may be readily apparent to persons of ordinarily skill in the art, may not have been disclosed. In the present disclosure, relational terms such as first and second, and the like, may be used to distinguish one entity from another entity, without necessarily implying any actual relationship or order between such entities.

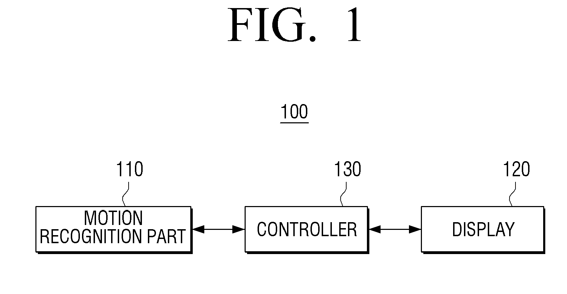

FIG. 1 is a block diagram illustrating the configuration of a display apparatus 100 according to an exemplary embodiment. As illustrated in FIG. 1, the display apparatus 100 includes a motion recognizer 110, a display 120 and a controller 130. In this case, the display apparatus 100 may be a smart television, but this is only an example. The display apparatus 100 may be realized as various display apparatuses such as a digital television, a desktop personal computer (PC), a notebook PC, etc.

The motion recognizer 110 receives an image signal (for example, successive frames) of a photographed user motion, and recognizes the user motion. In this case, the motion recognizer 110 may include a camera consisting of a lens and an image sensor. Herein, the motion recognizer 110 may be configured to be integrated with the display apparatus 100 or may be configured to be separate from the display apparatus 100 and connected to the display apparatus 100 via a cable or wireless network.

In addition, the motion recognizer 110 may two hands of a user. In this case, the motion recognizer 110 may recognize one hand of the user (for example, the right hand) first and then recognize the other hand (for example, the left hand), but this is only an example. The motion recognizer 110 may recognize the left hand first and then recognize the right hand, or may recognize both hands at the same time.

In a case where the motion recognizer 100 recognizes both hands, the motion recognizer 110 may recognize one hand first and then recognize a hand within a predetermined area or range with reference to the recognized hand as the other hand.

The display 120 displays image contents under the control of the controller 130. In response to the display apparatus 100 operating in a multi-view mode according to an exemplary embodiment, the display 120 may display a plurality of display screens corresponding to a plurality of contents. In this case, the multi-view mode refers to a mode where a plurality of display screens corresponding to a plurality of contents are displayed alternately through one display.

The controller 130 controls overall operations of the display apparatus 100. In particular, according to an exemplary embodiment, in response to a user motion using two hands being input through the motion recognizer 110, the controller 130 may determine a control command based on one hand of the recognized two hands, determine the magnitude of the control command based on the other hand, and control the display apparatus according to the determined control command and magnitude of the control command. In this case, the control command may include at least one of channel change, volume control, page change, and cursor movement.

Specifically, the controller 130 may determine the type of control command using one hand (for example, the right hand) of the recognized two hands. Specifically, in response to a conform motion using one hand (for example, a grab motion) being input while a cursor is displayed on a specific icon of a display screen, the controller 130 may determine a control command corresponding to the specific icon as a control command. For example, in response to a grab motion being input while a cursor is displayed on a volume-up icon of the display screen, the controller 130 may determine a volume-up command as the control command. In addition, in response to the display apparatus 100 mapping and storing a control command corresponding to a control motion using one hand and the control motion using one hand is input, the controller 130 may determine a control command corresponding to the pre-stored input control motion as the control command. For example, in response to the display apparatus 100 mapping and storing a control command for volume control with a left-and-right slap motion and a right slap motion being input, the controller 130 may determine a volume-up command as the control command.

In addition, the controller 130 may determine the magnitude of a control command according to the number of spread fingers of the other hand (for example, the left hand) of the recognized two hands. For example, in response to three fingers out of the five fingers being spread, the controller 130 may determine that the magnitude of the control command is three.

The controller 130 may also determine the display apparatus 100 according to the determined control command and the determined magnitude of the control command. For example, in response to a user's right hand performing a slap motion in the right direction and two of the left fingers being spread, the controller 130 may perform the operation of increasing the volume by two levels.

As described above, by determining a control command using one hand and determining the magnitude of the control command using the other hand, a user may perform a desired function more conveniently and rapidly.

In another example, in response to a user motion using two hands being recognized through the motion recognizer 110 while a multi-view mode is maintained, the controller 130 may determine a display screen to be controlled by the user based on one hand of the user, determine a control command based on the other hand of the user, and control a display apparatus according to the determined display screen and the determined control command.

First of all, when there are a plurality of users, in order to prevent a recognition error, the motion recognizer 110 may recognize one hand of a user (for example, a left hand) and then, recognize a hand within a predetermined area with reference to the recognized one hand as the other hand.

Subsequently, the controller 130 may determine a display screen to be controlled by the user according to the number of spread fingers of the other hand. For example, in response to two fingers of the other hand being spread while a first display screen displaying a first content and a second display screen displaying a second content are displayed, the controller 130 may determine the second display screen as the display screen to be controlled by the user.

In this case, the controller 130 may control the display 120 to display an indicator corresponding to the number of fingers on each of a plurality of display screens corresponding to a plurality of contents. For example, the controller 130 may control the display 120 to display an icon including one spread finger on the first display screen and to display an icon including two spread fingers on the second display screen.

The controller 130 may control the display apparatus 100 according to a display screen that a user wishes to control and a control command. Specifically, in response to a display screen that a user wishes to control being the first display screen and a control command being determined to be a channel up command, the controller 130 may control the display 120 to display the next channel on the first display screen.

As described above, in a multi-view mode where a plurality of contents are displayed simultaneously, a plurality of users may control a display screen that they watch more intuitively using two hands.

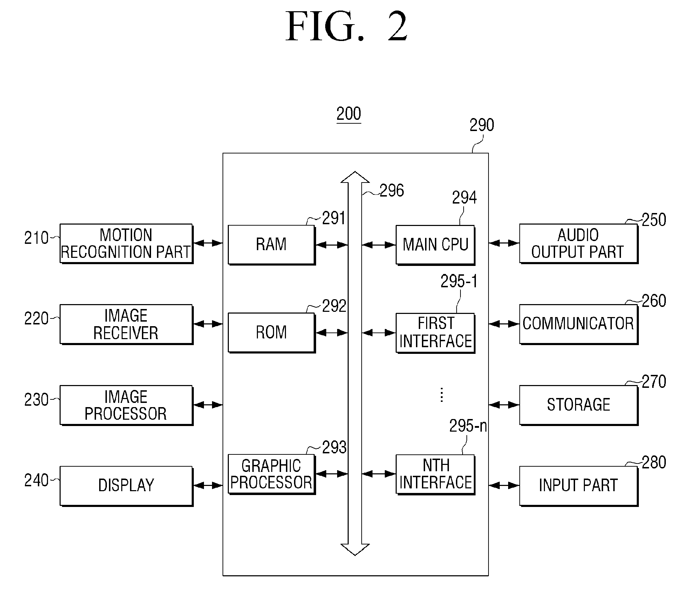

Hereinafter, a display apparatus 200 according to various exemplary embodiments will be described with reference to FIG. 2 to FIG. 9D.

FIG. 2 is a block diagram illustrating the configuration of the display apparatus 200 in detail according to an exemplary embodiment. As illustrated in FIG. 2, the display apparatus 200 includes a motion recognizer 210, an image receiver 220, an image processor 230, a display 240, an audio output part 250, a communicator 260, a storage 270, an input part 280, and a controller 290.

FIG. 2 illustrates various components of the display apparatus 200 is an apparatus having various functions such as a display function, a multi-view function, a communication function, an image receiving function, etc. Accordingly, depending on the exemplary embodiments, a part of the components illustrated in FIG. 2 may be omitted or changed, or other components may be further added.

The motion recognizer 210 receives an image signal (for example, successive image frames) of images of user motion and recognizes the user motion. In this case, the motion recognizer 110 may include a camera and a motion recognition module. The camera may be a depth camera, but this is only an example. The camera may be another type of camera. In addition, the camera may be configured to be integrated with the display apparatus 200 or may be configured to be separate from the display apparatus 200. The camera may be connected to the display apparatus 200 via a cable or wirelessly. The motion recognition module may divide an image (for example, successive frames) corresponding to a user motion input through the camera into a background area and a hand area (for example, spreading fingers or making a fist with fingers), and may recognize successive hand movements. In response to a user motion being input, the motion recognition module stores the received image by frame, and detects a user's hand, which is the subject of the user motion, by using the stored frames. In particular, the motion recognition module detects a user's hand by detecting at least one of shape, color, and movement of an object included in the frames. The motion recognition module may trace the movement of the detected object by using the location of user's hand included in each of a plurality of frames. The motion recognition module determines a motion according to the shape and movement of the traced object. For example, the motion recognition module determines a user motion by using at least one of a change in the shape, speed, location, and direction of the object. The user motion includes a 'grab' which is the motion of clenching a hand, a 'pointing move' which is the motion of moving a displayed cursor using a hand, a `slap' which is the motion of moving a hand in one direction at higher than a certain speed, a 'shake' which is the motion of shaking a hand left/right or up/down, and 'rotate' which is the motion of rotating a hand. However, the exemplary embodiments may also be applied to other motions than the above-described motions. For example, the user motion may further include a 'spread' which is the motion of spreading a clenched hand.

In order to determine whether a user motion is a 'pointing move' or a 'slap', it is determined whether an object moves beyond a predetermined area (for example, a square of 40cm x 40cm) within a predetermined time (for example, 800ms). If the object does not go beyond the predetermined area within the predetermined time, the motion recognition module may determine that the user motion is a 'pointing move'. However, if the object goes beyond the predetermined area within the predetermined time, the motion recognition module may determine that the user motion is a 'slap'. In another example, if it is determined that the speed of an object is below a predetermined speed (for example, 30 cm/s), the motion recognition module may determine that the user motion is a 'pointing move'. If it is determined that the speed of the object exceeds the predetermined speed, the motion recognition module determines that the user motion is a `slap'.

As described above, the controller 290 generates a control command of the display apparatus 200 using a recognized user motion. In this case, the control command may include various control commands such as channel change, volume control, change of page, movement of cursor, change of contents (for example, video, music, photo, etc.).

The image receiver 220 receives image contents from various external sources. Specifically, the image receiver 220 may receive a broadcast content from an external broadcasting station, an image content from an external apparatus (for example, DVD, set-top box, etc.), and a streaming content from an external server. In particular, the image receiver 220 may include a plurality of image receiving modules so that the display apparatus 200 operates in a multi-view mode.

The image processor 230 processes an image content received from the image receiver 220 to be data in a displayable form. In particular, the image processor 230 may include a plurality of image processing modules so that the display apparatus 200 operates in a multi-view mode.

The display 240 displays the image content processed by the image processor 230 under the control of the controller 290. In particular, in response to the display apparatus 200 operating in a multi-view mode for displaying a plurality of contents simultaneously, the display 240 may display a plurality of image contents which are processed by the image processor 230 alternately.

The audio output part 250 outputs audio data of an image content. In particular, in response to the display apparatus 200 operating in a multi-view mode, the audio output part 250 may output part of audio data of a plurality of contents through a speaker and output another part of audio data of the plurality of contents through an external audio play apparatus (for example, earphone, headphone, etc.) via cable or wirelessly.

The communicator 260 performs communication with various types of external apparatuses according to various types of communication methods. The communicator 260 may include a WiFi chip, a Bluetooth chip, a Near Field Communication (NFC) chip, and a wireless communication chip. Herein, the WiFi chip, the Bluetooth chip, and the NFC chip perform communication according to a WiFi method, a Bluetooth method and an NFC method, respectively. The NFC chip represents a chip which operates according to an NFC method which uses 13.56MHz band among various RF-ID frequency bands such as 135kHz, 13.56MHz, 433MHz, 860~960MHz, 2.45GHz, and so on. In the case of the WiFi chip or the Bluetooth chip, various connection information such as Service Set Identifier (SSID) and a session key may be transmitted or received first for communication connection and then, various information may be transmitted or received. The wireless communication chip represents a chip which performs communication according to various communication standards such as IEEE, Zigbee, 3rd Generation (3G), 3rd Generation Partnership Project (3GPP), Long Term Evolution (LTE) and so on.

The storage 270 stores various modules to drive the display apparatus 200. For example, the storage 270 may store software including a base module, a sensing module, a communication module, a presentation module, a web browser module, and a service module. In this case, the base module is a basic module which processes a signal transmitted from each hardware included in the display apparatus 200, and transmits the processed signal to an upper layer module. The sensing module collects information from various sensors, and analyzes and manages the collected information, and may include a face recognition module, a voice recognition module, a motion recognition module, an NFC recognition module, and so on. The presentation module is a module to compose a display screen, and may include a multimedia module to reproduce and output multimedia contents and a user interface (UI) rendering module to perform UI and graphic processing. The communication module is a module to perform communication with an external source. The web browser module is a module to access a web server by performing web browsing. The service module is a module including various applications to provide various services

As described above, the storage 270 may include various program modules, but some of the various program modules may be omitted, changed, or added according to the type and characteristics of the display apparatus 200. For example, in response to the display apparatus 200 being realized as a tablet PC, the base module may further include a determination module to determine a GPS-based location, and the sensing module may further include a sensing module to sense the operation of a user.

In addition, the storage 270 may be a motion database where a user motion is mapped with a corresponding control command and then stored.

The input part 280 receives a user command to control overall operations of the display apparatus 200. In this case, the input part 280 may be realized as a remote controller, but this is only an example. The input part 280 may be realized as other various input apparatuses such as a touch screen, a voice recognizer, and a pointing device.

The controller 290 controls overall operations of the display apparatus 200 using various programs stored in the storage 270.

The controller 290, as illustrated in FIG. 2, includes a RAM 291, a ROM 292, a graphic processor 293, a main CPU 294, a first to a nth interface 295-1 ~ 295-n, and a bus 296. In this case, the RAM 291, the ROM 292, the graphic processor 293, the main CPU 294, and the first to the nth interface 295-1 ~ 295-n may be interconnected through the bus 296.

The ROM 292 stores a set of commands for system booting. If a turn-on command is input and thus, power is supplied, the main CPU 294 copies O/S stored in the storage 270 in the RAM 291 according to a command stored in the ROM 292, and boots a system by executing the O/S. Once the booting process is completed, the main CPU 294 copies various application programs stored in the storage 270 in the RAM 291, and performs various operations by executing the application programs copied in the RAM 291.

The graphic processor 293 generates a screen including various objects such as an icon, an image, a text, etc. using an operation part (not shown) and a rendering part (not shown). The operation part computes property values such as coordinates, a shape, a size, and a color of each object to be displayed according to the layout of a screen using a control command received from the input part 280. The rendering part generates screens of various layouts including objects based on the property values computed by the operation part. The screens generated by the rendering part are displayed in a display area of the display 240.

The main CPU 294 accesses the storage 270 and performs booting using the O/S stored in the storage 270. In addition, the main CPU 294 performs various operations using various programs, contents, data, etc. stored in the storage 270.

The first to the nth interface 295-1 to 295-n are connected to the above-described various components. One of the interfaces may be a network interface which is connected to an external apparatus via a network.

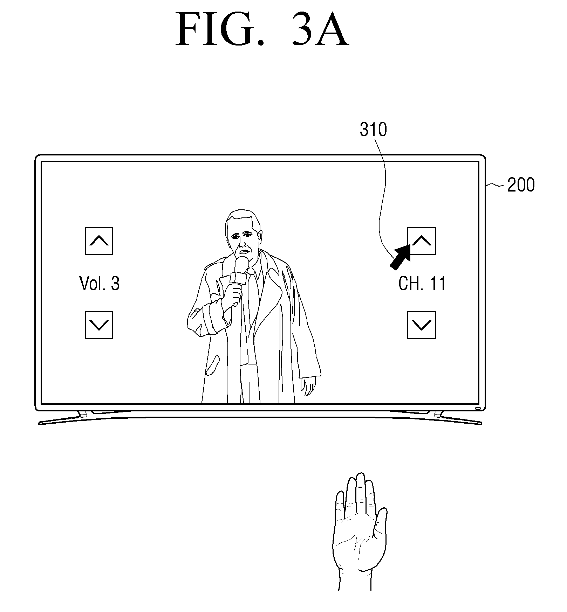

In particular, in response to a user motion using two hands being recognized through the motion recognizer 210, the controller 290 may determine a control command using one hand, determine the magnitude of the control command using the other hand, and control the display apparatus 100 according to the determined control command and the determined magnitude of the control command, which will be described in various exemplary embodiments with reference to FIG. 3A to FIG. 5D.

In an exemplary embodiment, in response to a user motion (for example, a move motion) using a right hand being input while the display apparatus 200 maintains a motion recognition mode, the controller 290 may move a cursor 310 to a channel up icon according to the user motion as illustrated in FIG. 3A.

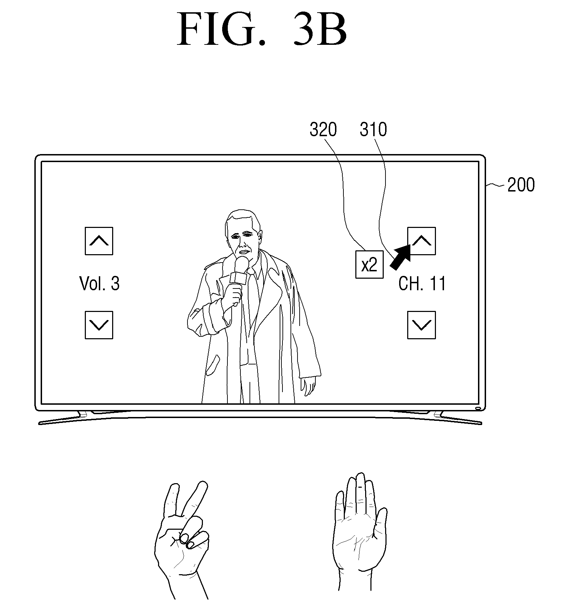

In response to a user motion of spreading two left fingers being input through the motion recognizer 210, the controller 290 may determine that the magnitude of the control command is two. In this case, as illustrated in FIG. 3B, the controller 290 may control the display 240 to display, in an area adjacent to the cursor 310, an indicator 320 for indicating the magnitude of the control command is two.

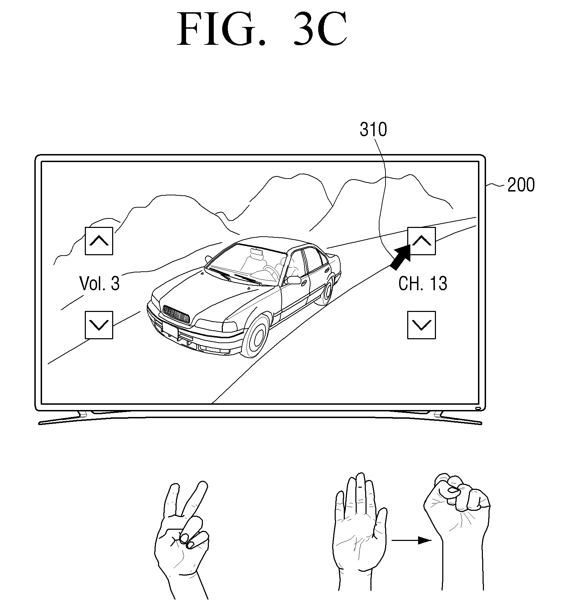

In response to a grab motion of grapping the right hand being input while the cursor 310 is located at the channel up icon and two left fingers are spread as illustrated in FIG. 3C, the controller 290 may determine a channel up command as the control command.

Subsequently, the controller 290 may move the broadcast channel which is currently displayed upwards by two channels according to the determined control command and the determined magnitude of the control command. That is, in response to the channel up command being received while the user's two left fingers are spread when channel 11 is currently displayed, the controller 290 may control the display 240 to display channel 13 on the current display screen.

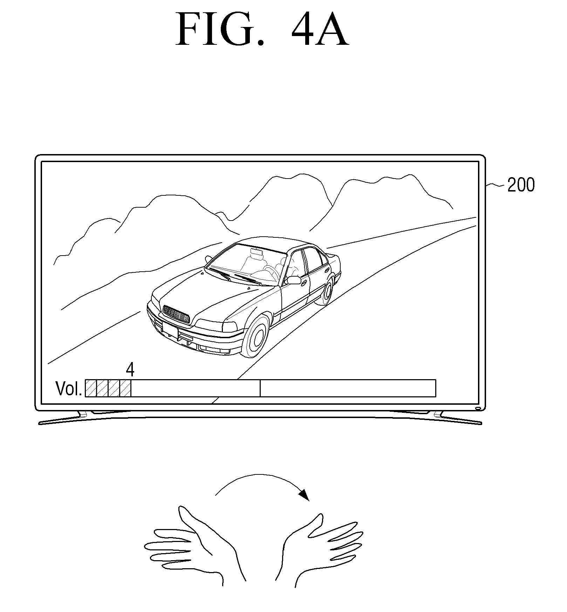

In another example, in response to a slap motion in the right direction using the user's right hand being input while the display apparatus 200 maintains the motion recognition mode, the controller 290 may determine a volume up command as the control command corresponding to the slap motion. For example, in response to a slap motion in the right direction using the user's right hand being input while the volume level is 3, the controller 290 may increase the volume level to 4, as shown in FIG. 4A.

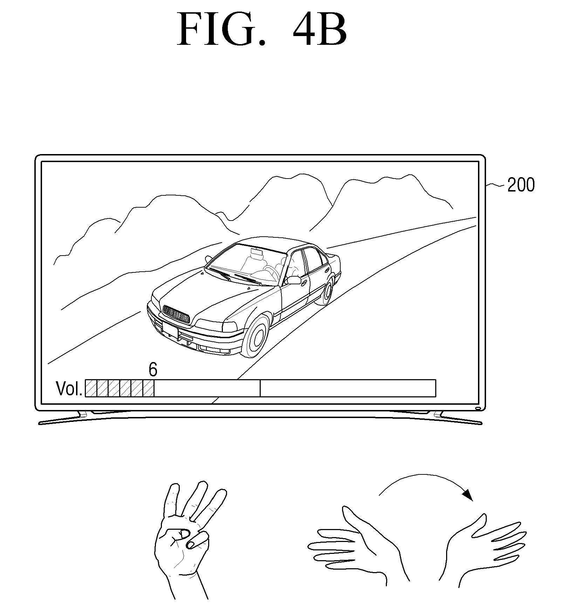

In response to a slap motion in the right direction using the right hand being input while the user's three fingers are spread when the display apparatus 200 maintains the motion recognition mode, the controller 290 may determine a volume up command as the control command corresponding to the slap motion and determine that the magnitude of the control command is three. For example, in response to a slap motion in the right direction using the right hand being input while three left fingers are spread when the volume level is 3, the controller 290 may increase the volume level to 6 as illustrated in FIG. 4B. Alternatively, in response to a slap motion in the right direction using the right hand being input again while three left fingers are spread when the volume level is 6, the controller 290 may increase the volume level to 9.

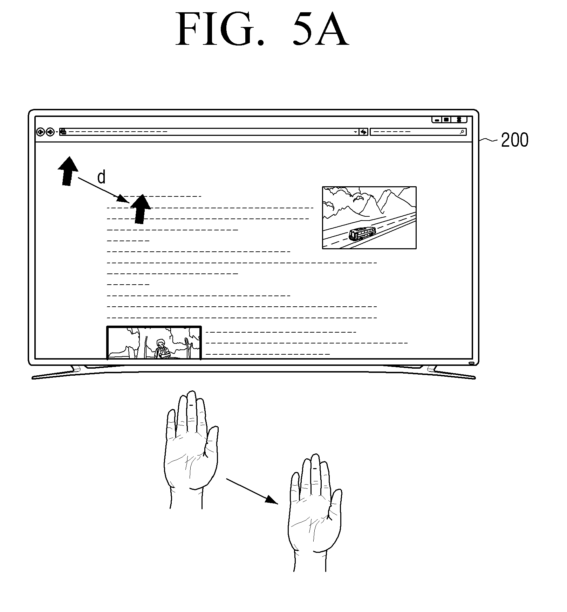

In another example, in response to a move motion to move a cursor using the right hand being input while the display apparatus 200 maintains the motion recognition mode, the controller 290 may move the cursor according to the control command corresponding to the move motion. For example, in response to a move command to move the cursor in the lower right direction using the right hand being input, the controller 290 may move the cursor in the lower right direction as much as `d' as illustrated in FIG. 5A.

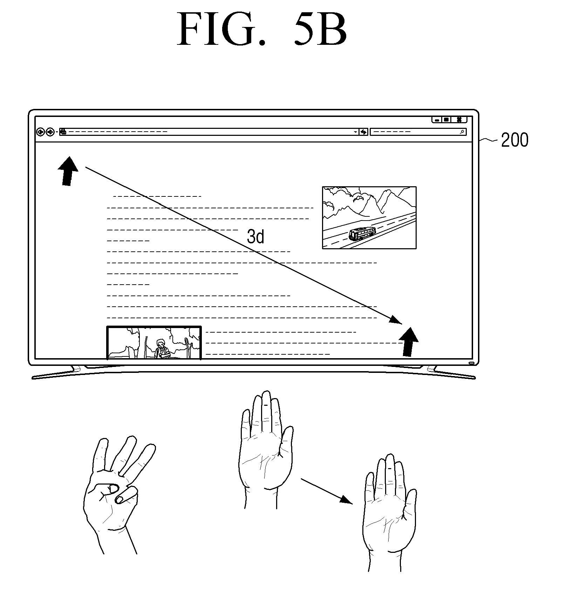

In response to a move motion to move the cursor using the right hand being input while the user spreads three left fingers when the display apparatus 200 maintains the motion recognition mode, the controller 290 may determine a cursor move command as the control command corresponding to the move motion and determine that the magnitude of the control command is three. For example, in response to a move motion to move the cursor in the lower right direction using the right hand being input while the user spreads three left fingers, the controller 290 may move the cursor in the lower right direction as much as '3d' as illustrated in FIG. 5B.

As described above with reference to FIGS. 3A to 5B, a user may control the display apparatus 200 by determining a control command using one hand and determining the magnitude of the control command using the other hand and thus, the user may control a desired function more rapidly and conveniently.

In the above exemplary embodiment, volume control, channel change and cursor movement are described as an example of control command, but the exemplary embodiments may also be applied to other control commands (for example, page change, setting value change, etc.).

In another example, in response to a user motion using two hands being input while the display apparatus 200 operates in a multi-view mode, the controller 290 may determine a display screen that the user wishes to control using one hand, determine a control command using the other hand, and control the display apparatus according to the determined display screen and the determined control command.

In this case, in order to distinguish a plurality of hands, the motion recognizer 290 recognizes one of the two hands of the user (for example, the left hand) first and then, recognizes a hand within a predetermined area (for example, 70 cm in radius) with reference to the first recognized hand as the second hand. Subsequently, the controller 290 may determine a display screen that the user wishes to control based on the first recognized hand and determine a control command using the second recognized hand. In this case, the predetermined area may be adjusted by the user. In addition, the motion recognizer 290 may trace the second hand within a predetermined area with reference to first hand to see whether the second hand is maintained.

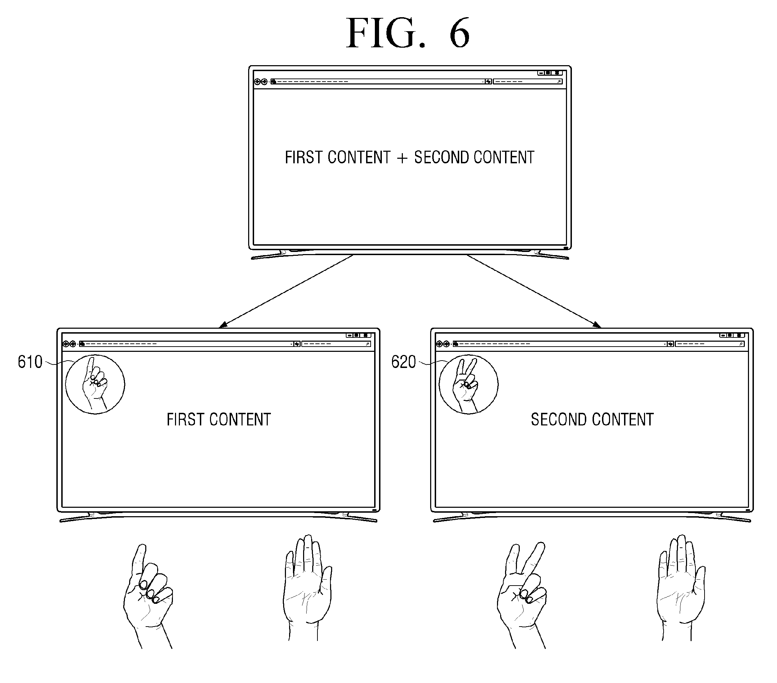

For example, as illustrated in FIG. 6, a display 240 may display a first content and a second content alternately. In this case, the display 240 may display an icon 610 having the shape of one finger being spread on the first display screen for displaying the first content, and display an icon 620 having the shape of two fingers being spread on the second display screen for display the second content.

In response to a slap motion in the upper direction using the right hand being input while a first user spreads one left finger, the controller 290 may control the display 240 to display the broadcast content of channel 12 on the first display screen which currently displays the broadcast content of channel 11. In addition, in response to a slap motion in the left direction using the right hand being input while a second user spreads two left fingers, the controller 290 may decrease the volume level of the image content which is displayed on the second display screen by "1".

In other words, a plurality of users may select a display screen that they wish to control using a finger of one hand, and control the selected display screen using the other hand.

In another example, the controller 290 may select an area of the display screen, which a user wishes to control, using the user's two hands.

Specifically, the motion recognizer 210 recognizes the user's two hands. In this case, in response to a user motion waving the user's two hands being input, the motion recognizer 210 may recognize the user's two hands.

Subsequently, the controller 290 may determine a coordinate value of axis X using one hand, and determine a coordinate value of axis Y using the other hand. In this case, the controller 290 may determine a coordinate value using the number of spread fingers. That is, the controller 290 may determine the coordinate value of axis X using the number of spread fingers of the left hand, and determine the coordinate value of axis Y using the number of spread fingers of the right hand. For example, in response to the user spreading two left fingers and five right fingers, the controller 290 may determine that the area to be controlled by the user as the area (2, 5).

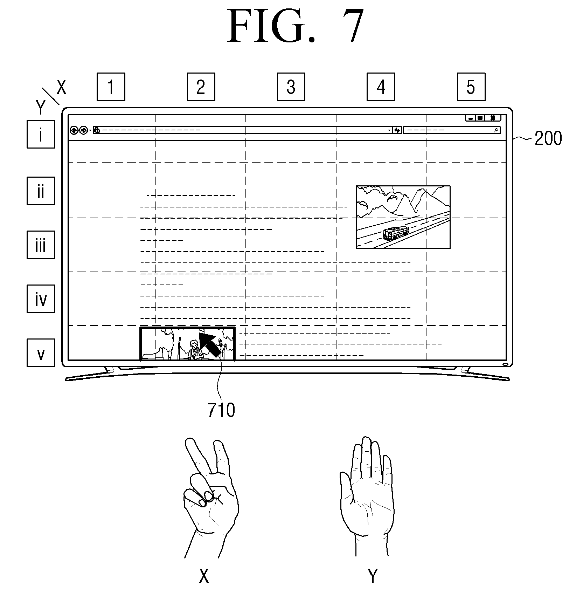

In addition, the controller 290 may move a cursor 710 to the determined area. For example, in response to determining that the area to be controlled by the user is the area (2, 5), the controller may move the cursor 710 to the area (2, 5) as illustrated in FIG. 7.

According to the above exemplary embodiments, a user may move a cursor to the area that he or she wishes to control more rapidly and conveniently.

The controller 290 may control the display 240 not to display grids which are marked as dots to distinguish areas in FIG. 7, but this is only an example. The controller 290 may control the display 240 to display grids according to a user setting.

The display screen is divided into a 5 X 5 matrix in FIG. 7, but this is only an example. The display screen may be divided by less (or more) than 5 X 5 depending on a user setting or an application. For example, the controller 290 may divide the display screen by 4 X 4 or 3 X 3.

In another example, the controller 290 may control a display apparatus according to a line-based user motion using two hands.

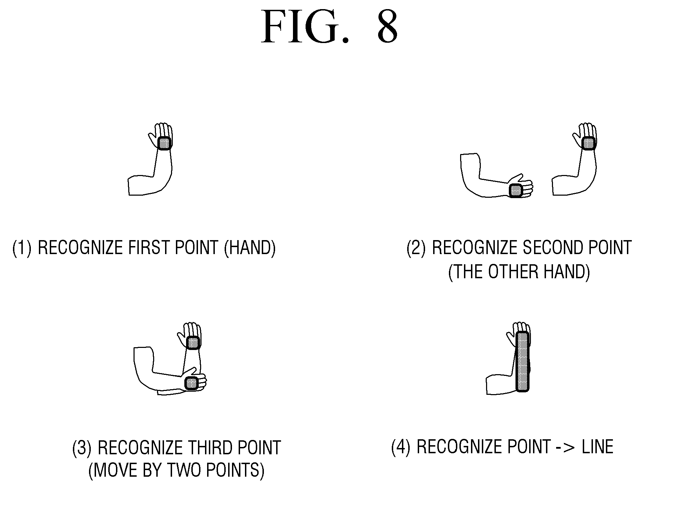

First of all, the motion recognizer 210 may recognize a line-based user hand using two hands. Specifically, the motion recognizer 210 may recognize the palm of one hand of a user as a first point as illustrated in FIG. 8(1). The motion recognizer 210 may recognize the palm of the other hand of the user as a second point as illustrated in FIG. 8(2). As illustrated in FIG. 8(3), in response to the other hand of the user moving to the elbow of one hand of the user, the motion recognizer 210 may generate a control line by connecting the first point to the second point.

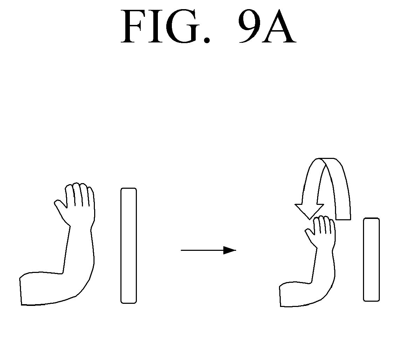

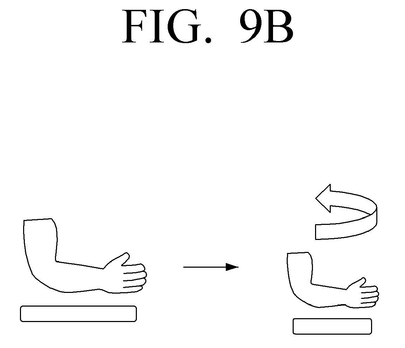

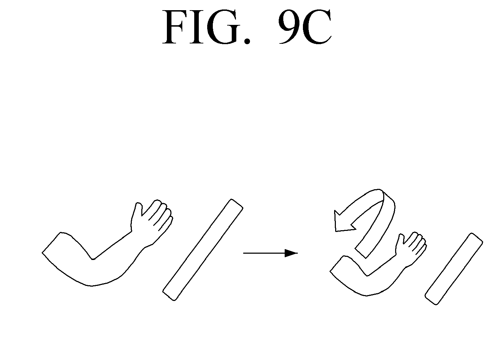

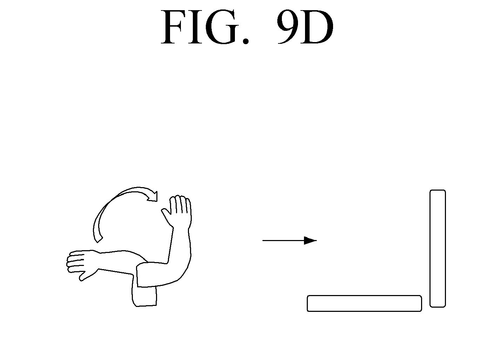

In addition, the controller 290 may control various functions of a display apparatus according to the direction and length of the control line. Specifically, as illustrated in FIG. 9A, in response to moving one hand up and down while the control line is located in the length direction, the controller 290 determines whether the length of the control line increases or decreases. In response to the increase of the control line, the controller 290 may perform a channel up function, and in response to the decrease of the control line, the controller 290 may perform a channel down function. In addition, as illustrated in FIG. 9B, in response to the user's one hand moving back and forth while the control line is located in the width direction, the controller 290 determines whether the length of the control line increases or decreases. In response to the increase of the control line, the controller 290 may perform a volume up function, and in response to the decrease of the control line, the controller 290 may perform a volume down function. Further, as illustrated in FIG. 9C, in response to the user's one hand moving back and forth while the control line is located in the diagonal direction, the controller 290 determines whether the length of the control line increases or decreases. In response to the increase of the control line, the controller 290 may perform a zoom-in function, and in response to the decrease of the control line, the controller 290 may perform a zoom-out function. In addition, the controller 290 may rotate the screen according to the direction of the user's hand. Specifically, in response to the user's hand being located in the width direction, the controller 290 displays the display screen horizontally. In response to changing the direction of the user's hand from the horizontal direction to the vertical direction, the controller 290 may display the display screen by changing its direction from the horizontal direction to the vertical direction.

As described above, it is possible to control a plurality of screens simultaneously through a line-based user motion. That is, the first user may control the first display screen through a line-based arm motion, and the second user may control the second display screen through a hand motion.

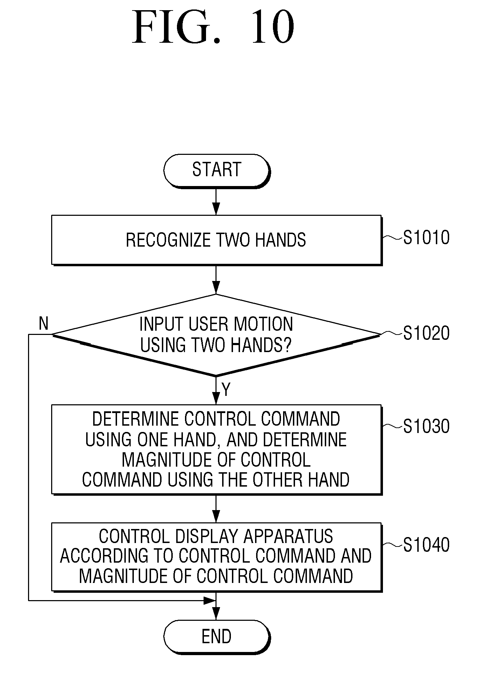

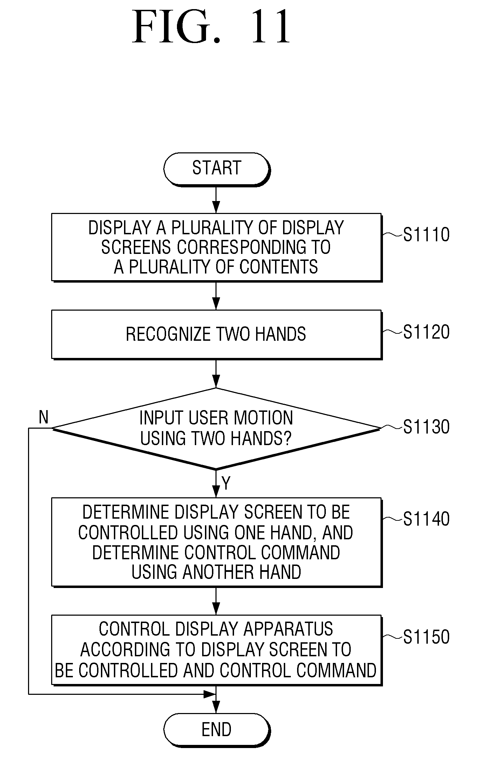

Hereinafter, the method for controlling a display apparatus using two hands according to various exemplary embodiments will be described with reference to FIGS. 10 and 11.

FIG. 10 is a flowchart which illustrates the method for controlling the display apparatus 100 using two hands according to an exemplary embodiment.

First, the display apparatus 100 recognizes two hands of a user (operation S1010). In this case, the display apparatus 100 may recognize one hand first and then, recognize the other hand, but this is only an example. The display apparatus 100 may recognize two hands simultaneously.

Subsequently, the display apparatus 100 determines whether a user motion using two hands is input (operation S1020).

In response to a user motion using two hands being input (operation S1020-Y), the display apparatus 100 determines a control command using one hand, and determines the magnitude of the control command using the other hand (operation S1030). Specifically, in response to a confirm motion (for example, a grab motion) using one hand being input while a cursor is displayed on a specific icon of the display screen, the display apparatus 100 may determine a control command corresponding to the specific icon as the control command. In addition, the display apparatus 100 may determine a control command corresponding to an input control motion as the control command to be executed. Further, the display apparatus 100 may determine the magnitude of a control command according to the number of spread fingers of the other hand (for example, the left hand) of the recognized two hands.

Subsequently, the display apparatus 100 controls the display apparatus 100 according to the determined control command and the determined magnitude of the control command (operation S1040). In this case, the control command may include at least one of channel change, volume control, page change, and cursor movement.

FIG. 11 is a flowchart which illustrates the method for controlling the display apparatus 100 using two hands according to another exemplary embodiment.

First of all, the display apparatus 100 displays a plurality of display screens corresponding to a plurality of contents (operation S1110). That is, the display apparatus 100 may display a plurality of image contents alternately in a multi-view mode.

Subsequently, the display apparatus 100 recognizes two hands (operation S1120). In this case, the display apparatus 100 may recognize one hand first and then, recognize the other hand within a predetermined area with reference to the recognized one hand. In response to recognizing two hands, the display apparatus 100 may display an indicator corresponding to the number of fingers on each of the plurality of display screens.

The display apparatus 100 determines whether a user motion using two hands is input (operation S1130).

In response to a user motion using two hands being input (S1130-Y), the display apparatus 100 determines a display screen to be controlled using one hand, and determines a control command using the other hand (operation S1140). In particular, the controller 290 may determine a control command corresponding to the inputted one hand, and determine a display screen that a user wishes to control according to the number of spread fingers of the five fingers.

Subsequently, the display apparatus 100 controls the display apparatus according to the display screen to be controlled and the control command (operation S1150).

As described above, according to various exemplary embodiments, a user may control a display apparatus more conveniently and efficiently using two hands.

A program code to perform the method for controlling a display apparatus according to the various exemplary embodiments may be stored in a non-transitory computer readable medium. The non-transitory recordable medium refers to a medium which may store data semi-permanently rather than storing data for a short time such as a register, a cache, and a memory and may be readable by an apparatus. Specifically, the non-transitory readable medium may be CD, DVD, hard disk, Blu-ray disk, USB, memory card, ROM, etc.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for controlling a display apparatus, comprising:
recognizing two hands of a user using a camera;
in response to a user motion using the user's two hands being input, determining a control command using one hand out of the two hands, and determining a magnitude of the control command using the other hand of the user; and
controlling the display apparatus according to the determined control command and the determined magnitude of the control command.

2. The method as claimed in claim 1, wherein the determining comprises determining the magnitude of the control command according to a number of spread fingers out of fingers of the other hand.

3. The method as claimed in claim 1 or claim 2, wherein the determining comprises, in response to a confirm motion using the one hand being input while a cursor is displayed on a specific icon of a display screen, determining a control command corresponding to the specific icon as the control command.

4. The method as claimed in one of claim 1 to claim 3, wherein the display apparatus performs mapping of a control motion using the one hand with a control command and stores the mapping,
wherein the determining comprises, in response to a control motion using the one hand being input, determining a control command corresponding to the input control motion as the control command.

5. The method as claimed in one of claim 1 to claim 4, wherein the control command includes at least one of channel change, volume control, page change, and cursor movement.

6. A display apparatus, comprising:
a display configured to display an image;
a motion recognition part configured to recognize two hands of a user using a camera;
a controller configured to, in response to a user motion using the user's two hands being input, determine a control command using one hand out of the two hands, determine a magnitude of the control command using the other hand of the user, and control the display apparatus according to the determined control command and the determined magnitude of the control command.

7. The apparatus as claimed in claim 6, wherein the controller determines the magnitude of the control command according to a number of spread fingers out of fingers of the other hand.

8. The apparatus as claimed in claim 6 or claim 7, wherein the controller, in response to a confirm motion using the one hand being input while a cursor is displayed on a specific icon of a display screen, determines a control command corresponding to the specific icon as the control command.

9. The apparatus as claimed in one of claim 6 to claim 8, further comprising:
a storage configured to perform mapping of a control motion using the one hand with a control command and store the mapping,
wherein the controller, in response to a control motion using the one hand being input, determines a control command corresponding to the input control motion as the control command.

10. The apparatus as claimed in one of claim 6 to claim 9, wherein the control command includes at least one of channel change, volume control, page change, and cursor movement.
